# EUROPÄISCHE PATENTSCHRIFT

(11) **EP 1 497 735 B1**
(45) Veröffentlichungstag und Bekanntmachung des Hinweises auf die Patenterteilung: **09.06.2010**
(21) Anmeldenummer: 03720277.7
(22) Anmeldetag: 14.04.2003
(51) Int. Cl.: G06F 13/42

(54) **VERFAHREN UND VORRICHTUNG ZUR ÜBERPRUFUNG EINER ÜBERWACHUNGSFUNKTION EINES BUSSYSTEMS UND BUSSYSTEM**
METHOD AND DEVICE FOR TESTING A MONITORING FUNCTION OF A BUS SYSTEM AND A CORRESPONDING BUS SYSTEM
PROCEDE ET DISPOSITIF D'INSPECTION D'UNE FONCTION DE SURVEILLANCE D'UN SYSTEME DE BUS ET SYSTEME DE BUS

(30) Priorität: 15.04.2002 DE 10216920
(43) Veröffentlichungstag der Anmeldung: 19.01.2005
(73) Patentinhaber: ROBERT BOSCH GMBH, 70442 Stuttgart (DE)
(72) Erfinder: FUEHRER, Thomas, 70839 Gerlingen (DE); MUELLER, Bernd, 71229 Leonberg (DE)
(86) Internationale Anmeldenummer: PCT/DE2003/001246
(87) Internationale Veröffentlichungsnummer: WO 2003/088062

(56) Entgegenhaltungen:
- DE-A- 19 950 433
- TEMPLE C: "Avoiding the babbling-idiot failure in a time-triggered communication system" FAULT-TOLERANT COMPUTING, 1998. DIGEST OF PAPERS. TWENTY-EIGHTH ANNUAL INTERNATIONAL SYMPOSIUM ON MUNICH, GERMANY 23-25 JUNE 1998, LOS ALAMITOS, CA, USA,IEEE COMPUT. SOC, US, 23. Juni 1998 (1998-06-23), Seiten 218-227, XP010291298 ISBN: 0-8186-8470-4

## Beschreibung

Die Erfindung betrifft ein Verfahren und eine Vorrichtung zur Überprüfung einer Überwachungsfunktion eines Bussystems und Bussystem gemäß dem Oberbegriff der unabhängigen Ansprüche.

Die Vernetzung von Steuergeräten, Sensorik und Aktuatorik mit Hilfe eines Kommunikationssystems, eines Bussystems, hat in den letzten Jahren beim Bau von modernen Kraftfahrzeugen oder auch im Maschinenbau, insbesondere im Werkzeugmaschinenbereich als auch in der Automatisierung, drastisch zugenommen. Synergieeffekte durch Verteilung von Funktionen auf mehrere Steuergeräte können dabei erzielt werden. Man spricht hierbei von verteilten Systemen. Die Kommunikation zwischen verschiedenen Stationen findet mehr und mehr über einen Bus bzw. ein Bussystem statt. Der Kommunikatiousverkehr auf dem Bussystem, Zugriffs- und Empfangsmechanismen sowie Fehlerbehandlung werden über ein Protokoll geregelt. Als Protokoll im Kfz-Bereich etabliert ist der CAN (controller area network). Dies ist ein ereignisgesteuertes Protokoll, d. h. Protokollaktivitäten wie das Senden einer Nachricht werden durch Ereignisse iniziiert, die ihren Ursprung außerhalb des Kommunikationssystems selbst haben. Der eindeutige Zugang zum Kommunikationssystem bzw. Bussystem wird über eine prioritätsbasierte Bitarbitrierung gelöst. Eine Voraussetzung dafür ist, dass jeder Nachricht eine eindeutige Priorität zugewiesen ist. Das CAN-Protokoll ist sehr flexibel. Ein Hinzufügen weiterer Knoten und Nachrichten ist damit problemlos möglich, solange es noch freie Prioritäten gibt.

Ein alternativer Ansatz zu einer solchen ereignisgesteuerten spontanen Kommunikation ist der rein zeitgesteuerte Ansatz. Alle Kommunikationsaktivitäten auf dem Bus sind strikt periodisch. Protokollaktivitäten wie das Senden einer Nachricht werden nur durch das Fortschreiten einer für das gesamte Bussystem gültigen Zeit ausgelöst. Der Zugang zum Medium basiert auf der Zuteilung von Zeitbereichen bzw. Zeitabschnitten, in denen ein Sender exklusives Senderecht hat. Ein Hinzufügen von neuen Knoten wird dann möglich, wenn zuvor die entsprechenden Zeitabschnitte freigelassen wurden. Dieser Umstand erzwingt, die Nachrichtenreihenfolge schon vor Inbetriebnahme festzusetzen, wobei ein Fahrplan erstellt wird, der den Anforderungen der Nachrichten bezüglich Wiederholrate, Redundanz, Deadlines usw. genügen muss.

Neben dem ereignisgesteuerten Ansatz und dem rein zeitgesteuerten Ansatz ist auch ein zeitgesteuerter CAN-Ansatz, der sogenannte TTCAN (time triggered controller area network) bekannt. Dieser genügt den oben skizzierten Forderungen nach zeitgesteuerter Kommunikation sowie den Forderungen nach einem gewissen Maß an Flexibilität. Der TTCAN erfüllt dies durch den Aufbau der Kommunikationsrunde (basic cycle) in sogenannte exklusive Zeitfenster bzw. Zeitabschnitte für periodische Nachrichten bestimmter Kommunikationsteilnehmer und in sogenannte arbitrierende Zeitfenster oder Zeitabschnitte für spontane Nachrichten mehrerer Kommunikationsteilnehmer.

Neben den genannten Bussystemen ist eine Vielzahl von Bus- bzw. Kommunikationssystemen zur Verbindung von Teilnehmern in verteilten Systemen bekannt.

Für Kommunikationssysteme bzw. Bussysteme gibt es eine Reihe von Möglichkeiten, Zugriffskonflikte zu vermeiden oder zu lösen. In CAN wird z. B. die bitweise Arbitrierung verwendet. Diese ist sehr robust, durch Laufzeitphänomene ist aber die maximale Übertragungsgeschwindigkeit prinzipbedingt limitiert. Bei zeitgesteuerten Kommunikationssystemen wird das Zugriffsproblem per Ansatz und Konfiguration gelöst. Die Konflikte werden schon offline vermieden durch vorherige Planung. Voraussetzung ist allerdings ein gemeinsames Verständnis der Zeit; das netzwerkweit Gültigkeit besitzt. Bei diesen Systemen gibt es aber in der Regel keine Möglichkeit, im Fehlerfall die Zugriffskonflikte zu behandeln, da der Zugriff an sich nicht verhindert werden kann. Deshalb ist es üblich, einen sogenannten Busguardian oder Buswächter BG als zusätzliche Einheit einzuführen, der den physikalischen Zugriff nur in den konfigurierten Zeitabschnitten erlaubt. Damit ist der Zugriffskonflikt auch im Fehlerfall lösbar bzw. vermeidbar.

Wie bei allen Überwachungssystemen stellt sich hier das Problem der Eigenüberwachbarkeit des Überwachungssystems. Die wesentliche Funktion des Busguardian oder Buswächters, das physikalische Verhindern des Zugriffs, wird im Normalfall nie benötigt, insofern die Verfügbarkeit dieser Funktion auch nicht getestet. Aus Systemsicht ist eine Überwachung dieser Funktion aber notwendig, um nicht mit schlafenden Fehlern umgehen zu müssen. Dazu ist die DE 199 50 433 A1 als Stand der Technik bekannt. Dabei wird ein Verfahren zur Überwachung dieser Funktion beschrieben. Nachteilig im genannten Stand der Technik ist allerdings, dass die Überprüfung bzw. Überwachung der Busguardian-Funktion in einem Zeitabschnitt erfolgt, der quasi üblicherweise zur Nachrichtenübermittlung verwendet würde, aber im Rahmen der Überprüfung nicht dazu verwendet werden kann. D. h. es wird innerhalb der regulären Kommunikationszeit zu Gunsten des Busguardian-Tests Zeit verbraucht, die normalerweise zum Senden für Nachrichten vorgesehen wäre.

Aus dem Dokument Temple Christopher: *"Avoiding the Babbling-Idiot Failure in a TimeTriggered Communication System"* ist ein Bus-Guardian-Konzept bekannt, wobei Rechnereinheiten an einem Bus angeschlossen sind und jeweils über einen integrierten Bus-Guardian verfügen und wobei jede Rechnereinheit die korrekte Funktionsweise des integrierten Bus-Guardians überwacht.

Somit zeigt sich, dass der genannte Stand der Technik nicht in jeder Hinsicht optimale Ergebnisse zu liefern vermag. Daraus ergibt sich die Aufgabe, vorgenannte Situation zu optimieren und die sich aus dem Stand der Technik ergebenden Nachteile zu überwinden.

### Vorteile der Erfindung

Die Erfindung geht aus von einem Verfahren und einer Vorrichtung zur Überprüfung einer Überwachungsfunktion eines Bussystems sowie entsprechendem Bussystem mit wenigstens einem Teilnehmer, wobei erste Zeitabschnitte vorgesehen sind, in welchen Nachrichten übertragen werden und aus einer Anzahl erster Zeitabschnitte ein Kommunikationszyklus derart gebildet wird, dass die Nachrichten in ersten Zeitabschnitten übertragen werden, wobei die Anzahl erster Zeitabschnitte und die jeweilige Position eines ersten Zeitabschnitts für die Nachrichten des Teilnehmers in dem Kommunikationszyklus vorgegeben ist, wobei nun vorteilhafter Weise ein zweiter Zeitabschnitt nach dem Kommunikationszyklus vorgesehen ist, in welchem keine Nachrichten übertragen werden dürfen, wobei die Überwachungsfunktion in diesem zweiten Zeitabschnitt überprüft wird.

Der große Vorteil der vorliegenden Erfindung liegt nun darin, dass keine Zeit innerhalb des Kommunikationszyklus zu Gunsten des Busguardian-Tests verbraucht werden muss, die normalerweise zum Senden für Nachrichten vorgesehen ist. Der vorgeschlagene Testzeitpunkt liegt also innerhalb eines zweiten Zeitabschnittes, der nicht für aktive Kommunikation genutzt wird, der sogenannten Network Idle Time MT.

Zweckmäßiger Weise ist die Überwachungsfunktion derart ausgebildet, dass die Nachrichten des Teilnehmers, die außerhalb der für diese Nachrichten vorgegebenen ersten Zeitabschnitte gesendet werden, gesperrt werden.

Weiterhin zweckmäßig ist, dass in dem zweiten Zeitabschnitt interne Protokollaufgaben des Teilnehmers verarbeitet werden, welche ohnehin im Rahmen eines zyklischen housekeepings bearbeitet werden müssen. Dazu zählt beispielsweise und zweckmäßiger Weise die Ermittlung eines Zeitkorrekturwerts, um eine lokale Zeit eines Teilnehmers an eine globale Zeit des gesamten Bussystems anzupassen.

Zweckmäßiger Weise wird die Überwachungsfunktion derart überprüft, dass der Teilnehmer eine Testnachricht in dem zweiten Zeitabschnitt zu senden versucht und überprüft, ob diese Testnachricht gesperrt wurde. Vorteilhaft dabei ist, dass der Teilnehmer die von ihm selbst gesendeten Nachrichten vom Bussystem zurücklesen kann und damit selbst die Überprüfung, ob die Testnachricht gesperrt wurde oder nicht, durchführt, also zweckmäßiger Weise eine Loop-Back-Funktion vorhanden ist.

In einer vorteilhaften Ausgestaltung besitzt die Testnachricht eine im Bussystem eindeutige Signalform, um diese von transienten Einstrahlungen, beispielsweise im Rahmen der EMV-Problematik (Elektromagnetische Verträglichkeit), zu unterscheiden.

Zweckmäßiger Weise führt jeder Teilnehmer die Überprüfung der Überwachungsfunktion selbst durch, wobei gleichzeitig nur ein einziger Teilnehmer die Überprüfung der Überwachungsfunktion durchführen darf.

In einer weiteren vorteilhaften Ausgestaltung wird dem Teilnehmer ein konkreter Zeitabschnitt eindeutig zur Überprüfung zugeordnet. Dies kann ein dritter Zeitabschnitt innerhalb eines zweiten Zeitabschnitts sein oder ein konkreter Zeitabschnitt nach einem konkreten Kommunikationszyklus, so dass eindeutig feststeht, welcher Teilnehmer in welchem Zeitabschnitt eine Überprüfung durchführen darf.

Weiterhin vorteilhaft ist, dass jedem Teilnehmer eine eigene Testnachricht zugeordnet ist, wobei die Testnachrichten der einzelnen Teilnehmer sich voneinander unterscheiden.

Dabei ist es vorteilhaft, dass eine einem Teilnehmer zugeordnete Testnachricht nur von einem, und zwar demjenigen Teilnehmer, dem diese zugeordnet ist, empfangen werden kann.

Wird jedem Teilnehmer eine Testnachricht oder ein Zeitabschnitt eindeutig zugeordnet, so kann auch ein wenigstens zweiter Teilnehmer die Überprüfung der Überwachungsfunktion eines ersten Teilnehmers durchführen und zweckmäßiger Weise ein Ergebnis dieser Überprüfung dem ersten Teilnehmer mitteilen.

In einer besonderen Ausgestaltung ist das Bussystem in einer Sterntopologie aufgebaut, wobei jeder Teilnehmer eine Verbindung zu einem Koppelelement des Bussterns aufweist und das Koppelelement derart ausgebildet ist, dass eine Testnachricht eines Teilnehmers nicht durch das Koppelelement an weitere Teilnehmer weitergeleitet wird, so dass jeder Teilnehmer eindeutig eine Selbstüberprüfung durchführen kann.

Weitere Vorteile und vorteilhafte Ausgestaltungen ergeben sich aus der Beschreibung sowie den Merkmalen der Ansprüche.

### Zeichnung

Die Erfindung wird im Weiteren anhand der in der Zeichnung dargestellten Figuren näher erläutert.

Dabei zeigt
Figur 1 ein Bussystem mit wenigstens einem Teilnehmer, insbesondere zwei Teilnehmern, zur Darstellung des erfindungsgemäßen Verfahrens.
Figur 2 zeigt im Rahmen einer Signaldarstellung die erfindungsgemäße Überwachung der Busguardian-Funktion.
In Figur 3 ist in besonderer Ausgestaltung ein Bussystem in Sterntopologie mit Koppelelement dargestellt.

### Beschreibung der Ausführungsbeispiele

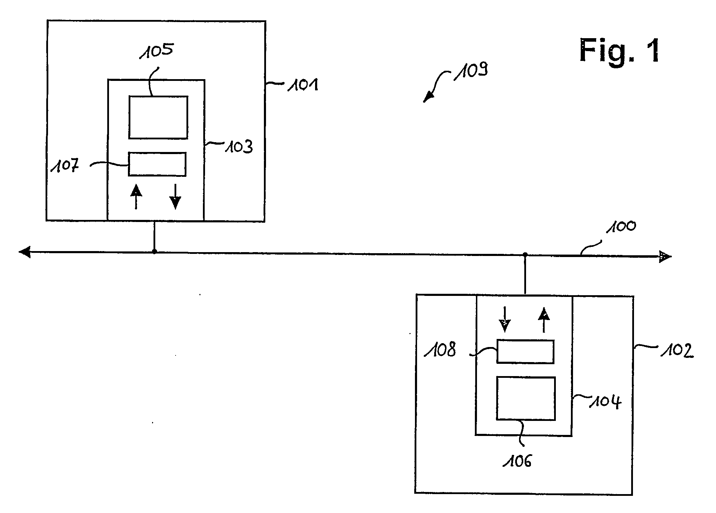

Figur 1 zeigt ein Kommunikationsnetzwerk oder Kommunikationssystem bzw. Bussystem 109 mit einem Bus 100. An diesen Bus angekoppelt sind Teilnehmer 101 und 102, die jeweils ein Koppelelement, insbesondere einen Buscontroller 104 bzw. 103 enthalten. Symbolisch dargestellt ist in den Buskoppeleinheiten 103 bzw. 104 eine Verarbeitungseinheit 105 bzw. 106 sowie ein zugehöriger Buswächter oder Busguardian bzw. die entsprechende Funktion mit Block 107 bzw. Block 108. Die Anordnung von Verarbeitungseinheit, Buscontroller bzw. Busschnittstelle und Überwachungsfunktion ist dabei beispielhaft zu sehen. Ebenso kann die Verarbeitung im Teilnehmer direkt ebenso wie die Überwachungsfunktion durchgeführt werden. Dabei sind beliebige Zuordnungen von Verarbeitungsfunktion und Überwachungsfunktion zu Buscontroller bzw. Teilnehmer selbst möglich. Auch eine externe Anordnung der genannten Bauteile und Funktionen bezogen auf den Teilnehmer ist denkbar.

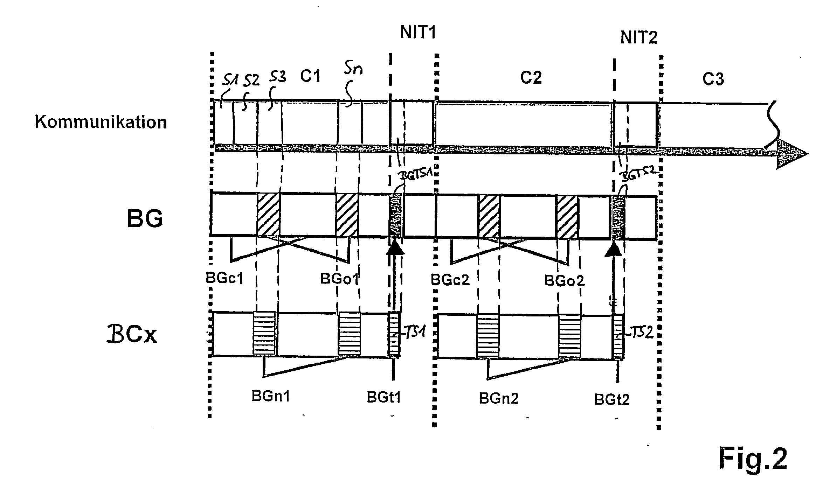

Figur 2 zeigt nun die Kommunikation auf dem Bus mit einem ersten Kommunikationszyklus C1, einem Kommunikationszyklus C2 und einem Kommunikationszyklus C3. Dabei sind die Kommunikationszyklen in mehrere Zeitabschnitte eingeteilt, hier beispielhaft dargestellt durch die Zeitabschnitte oder Time Slots S1, S2, S3 bzw. Sn. Im Anschluss an jeden Kommunikationszyklus C (C1, C2, ..) folgt die sogenannte Network Idle Time NIT, hier NIET1 für C 1 und NIT2 für C2. Diese Network Idle Time ist eine Zeitspanne, die der aktuelle Kommunikationsrunde zugerechnet werden kann, in der allerdings keine Nachrichten gesendet werden dürfen. In der Network Idle Time werden definitionsgemäß wichtige interne Protokollaufgaben wie z. B. die Berechnung der Uhrenkorrekturwerte zur Anpassung einer lokalen Zeit eines einzelnen Teilnehmers an die globale Zeit des gesamten Bussystems vorgenommen. Im fehlerfreien Fall sendet in der Network Idle Time NIT kein einziger Controller bzw. Buscontroller BC, und der Busguardian BG hat diesen Bereich bei allen Controllern zu schützen. Dazu ist ein getrennter Zeitstrang für den Busguardian sowie für den entsprechenden, beliebigen Buscontroller BCX dargestellt. Voraussetzung für einen aussagekräftigen end-to-end-Test ist, dass ein Sendeversuch unternommen wird und dessen Verhinderung durch den Busguardian überprüft wird.

Voraussetzung für das Verfahren ist es, dass der Sendeablauf des Kommunikationssystems wie gesagt zyklisch aufgebaut und in sogenannten Kommunikationszyklen oder Kommunikationsrunden strukturiert ist. Vorteilhaft ist es, dass jeder Knoten bzw. Teilnehmer oder Buscontroller die Möglichkeit hat, zu detektieren, wenn der Test ein negatives Resultat hat, d. h. über ein Loop Back die tatsächlichen Signale zurückließt. In den Abschnitten BGC1 bzw. BGC2 sperrt der Busguardian die Übertragungsmöglichkeit durch den Buscontroller BCX. Dieser hat die Möglichkeit, in den für ihn vorgesehenen Zeitschlitzen, hier S3 und Sn, normale Nachrichten, also hier BGN1 bzw. BGN2 auf den Bus zu übertragen. In diesen Zeitschlitzen ist die Nachrichtenübertragung durch den Buscontroller BCX durch den Busguardian BG freigegeben, wie dies durch BG01 und BG02 gezeigt ist.

Erfindungsgemäß wird nun nicht in der zur Kommunikation zur Verfügung stehenden Zeit ein Busguardian-Test durchgeführt, sondern in einer Zeit, in der keine Kommunikation auf den Bus erlaubt bzw. vorgesehen ist, in der sogenannten Network Idle Time. Dazu kann ein Controller, hier BCX, während der Network Idle Time ein Signal, insbesondere ein Testsignal, hier dargestellt mit TS1 bzw. TS2, senden, wobei dann überprüft wird, ob dieses gesendete Signal bzw. diese gesendete Nachricht auf dem Bus sichtbar ist oder nicht. Ist die Nachricht auf dem Bus sichtbar, so war die Sperrung fehlerhaft. Wenn also in den Abschnitten BGTS1 und BGTS2 das entsprechende Testsignal auf dem Bus detektiert werden kann, so ist die Sperrung durch den Busguardian nicht durchgeführt und die Überwachungsfunktion fehlerhaft.

Die Signale TS1 und TS2 als Testsignale bzw. Testnachrichten werden vom Buscontroller BCX übermittelt, was mit BGT1 bzw. BGT2 dargestellt ist. Wenn also der entsprechende Buscontroller bzw. die entsprechende Verarbeitungseinheit in der Network Idle Time ein Signal sendet und er auf dem Bus nichts sieht, so ist sein Signal nicht durch die Busguardian-Sperre hindurchgekonunen, und die Funktionsfähigkeit des Busguardians BG bezüglich Sperren ist erfolgreich nachgewiesen. In Negierung kann damit übrigens auch die Funktionsfähigkeit bezüglich des Öffnens des Sendeslots BG01 bzw. BGO2 überprüft werden.Falls der Test bzw. die Überprüfung der Überwachungsfunktion des Busguardian ein Signal zurückgibt, gibt es verschiedene Möglichkeiten, zu bestimmen, ob ein Knoten den Fehler bei sich hat oder nicht. Zunächst kann man generell über Vorgabe bestimmter Signalformen und Wiederholung des Tests zwischen Fehlern und transienten Einstrahlungen unterscheiden. Das bedeutet, dass der Testnachricht bzw. dem Testsignal eindeutig eine Signalform zugeordnet wird, so dass diese wiedererkannt und von anderen Signalen unterschieden werden kann. Zur Bestätigung kann dann gleichermaßen der Test wiederholt werden, um eine einmalige Einstrahlung oder ein einmaliges Fehlsignal von einem systematischen Fehler zu unterscheiden.

Des Weiteren kann man vorgeben, dass zwei Knoten bzw. zwei Teilnehmer oder Buscontroller bzw. der Verarbeitungseinheiten die Überprüfung der Busguardian-Funktion zur selben Zeit vornehmen. Dies kann einmal dadurch geschehen, dass jedem Teilnehmer bzw. Buscontroller ein konkreter Zeitschlitz in der Network Idle Time zugeordnet wird, eben beispielsweise BGTS1 bzw. BGTS2. Andererseits kann auch eine komplette Network Idle Time, eben NIT1 oder NIT2, einem bestimmten Buscontroller zugeordnet sein, so dass beispielsweise in NIT1 der Buscontroller 103 und in NIT2 der Buscontroller 102, also nach entsprechendem Kommunikationszyklus den Test der Busguardian-Funktion durchführen kann.

Wird nämlich eine solche Zuordnung bestimmter Zeitabschnitte oder auch eindeutiger Signalformen der Testnachrichten vom entsprechenden Teilnehmer zum jeweiligen Teilnehmer nicht durchgeführt und falls alle Knoten den Test zur selben Zeit machen könnten, wobei sich die Signale von einem Knoten zu allen anderen ausbreiten können, dann kann ein Knoten ein gemessenes von 0 verschiedenes Signal nicht ohne Weiteres als Fehler interpretieren bzw. die Fehlerauswertttng wird nicht eindeutig.

Um dies zu verhindern ist es beispielsweise möglich, das Testgeschehen einer Kommunikationsrunde mit zugehöriger Network Idle Time NIT, dieser konkret zuzuordnen oder auch Zeitabschnitte in der NIT konkret für Testläufe zu reservieren, so dass u.U. auch mehrere Testläufe in einer NIT möglich werden.

Wann immer dann also per Konfiguration bzw. durch vorhergehende Maßnahmen sichergestellt ist, dass sich zwei Testgeschehen bzw. Überprüfungen der Überwachungsfunktion verschiedener Knoten nicht überlappen können, kann ein Testsignal als Fehlerindikation für den gerade testenden Knoten gewertet werden.

Andererseits kann, falls Tests sich zeitlich überlappen, immer noch die Möglichkeit vorgesehen werden, eine eindeutige Fehleridentifikation möglich zu machen, eben durch unterschiedliche Testsignale, die jedem Tester bzw. Knoten zugeordnet werden oder Ähnliches. D. h. die Signalform des Testsignals bzw. der Testnachricht kann von Teilnehmer zu Teilnehmer, Busguardian zu Busguardian unterschieden sein. Dann ist es auch möglich, dass die Busguardian-Überwachung nicht von jedem Teilnehmer selbst durchgeführt wird, sondern von anderen Teilnehmern für einen anderen Teilnehmer, eben beispielsweise von Teilnehmer 101 für Teilnehmer 102. Gleiches gilt, wenn dem Test ein bestimmter Zeitschlitz bzw. Zeitabschnitt, wie oben beschrieben, zugeordnet ist, so dass dann andere Knoten über den Erfolg des Tests urteilen können bzw. ein Testergebnis dem getesteten Teilnehmer mitteilen können, beispielsweise über ein geeignetes acknowledge im Rahmen des Protokollmechanismus oder eine explizite Nachricht.

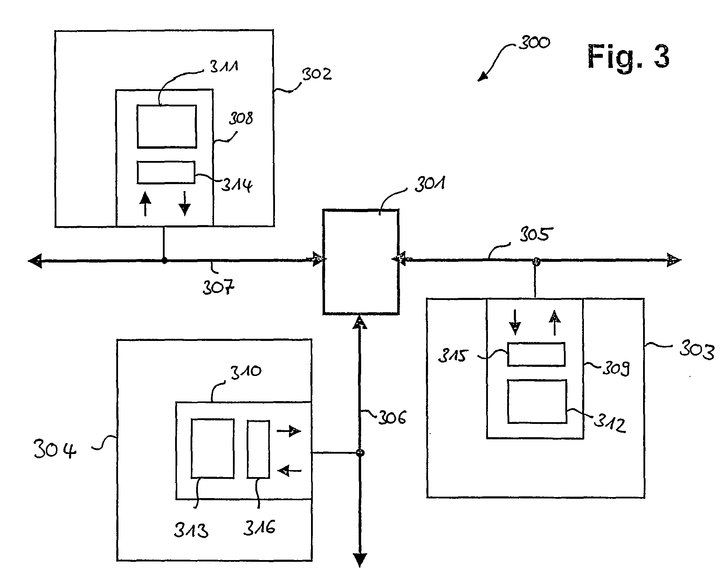

Eine besondere Ausgestaltung stellt ein Bussystem in Sterntopologie dar, wie dies in Figur 3 dargestellt ist. Dabei sind wiederum Busteilnehmer 302, 303 und 304 dargestellt, die jeweils einen Buscontroller 305, 309 bzw. 310 enthalten. Wie in Figur 1 ist darin wieder eine Verarbeitungseinheit 311, 312 bzw. 313 sowie die Busguardian-Funktion bzw. die Überwachung der Busguardian-Funktion 314, 315 und 316 dargestellt. Für die Teilnehmer bzw. die entsprechenden Buscontroller gelten die gleichen Voraussetzungen bzw. Annahmen und Möglichkeiten wie in Figur 1. Diese Teilnehmer sind nun jeweils an einen Bus 305, 306 bzw. 307 angekoppelt. Verbunden sind die Teilnehmer bzw. die entsprechenden Busse über ein Koppelelement 301. In dieser dargestellten Sterntopologie kann man nun die physikalischen Eigenschaften des Sterns verwenden und die Testsignale bzw. die Testnachrichten so wählen, dass sie sich durch einen Stern hindurch nicht fortpflanzen. D. h. der Test der n Teilnehmer eines Sternkopplers kann gleichzeitig erfolgen, da der Stern das Testsignal nicht durchschaltet und sozusagen jeder Teilnehmer auf seiner lokalen Verbindung, also Teilnehmer zum Stern, hier die Busse 305, 306, 307 testet und das entsprechende Loop Back durchführt. In diesem Fall ist somit durch die Topologie des Sterns ein Überlappen der Nachrichten bzw. der Testgeschehen im Rahmen der Überwachung der Busguardian-Funktion ausgeschlossen.

Somit wird im Gegensatz zum Stand der Technik eine vorteilhafte Erweiterung erzielt, die eine stärkere Rationalisierung der Buslast ermöglicht.

## Patentansprüche

1. Verfahren zur Überprüfung einer Überwachungsfunktion eines Bussystems mit wenigstens einem Teilnehmer, wobei erste Zeitabschnitte vorgesehen sind in welchen Nachrichten übertragen werden und aus einer Anzahl erster Zeitabschnitte ein Kommunikationszyklus derart gebildet wird, dass die Nachrichten in ersten Zeitabschnitten übertragen werden, wobei die Anzahl erster Zeitabschnitte und die jeweilige Position eines ersten Zeitabschnitts für die Nachrichten des Teilnehmers in dem Kommunikationszyklus vorgegeben ist und ein zweiter Zeitabschnitt vorgesehen ist, in dem die Überwachungsfunktion überprüft wird, **dadurch gekennzeichnet, dass** der zweite Zeitabschnitt für jeden Kommunikationszyklus festgelegt ist und dem Kommunikationszyklus zugerechnet ist, wobei der zweite Zeitabschnitt gegen Nachrichtenübertragung jedes Teilnehmers gesperrt ist.

2. Verfahren nach Anspruch 1, **dadurch gekennzeichnet, dass** in dem zweiten Zeitabschnitt auch interne Protokollaufgaben des Teilnehmers des Bussystems verarbeitet werden.

3. Verfahren nach Anspruch 2, **dadurch gekennzeichnet, dass** als interne Protokollaufgabe ein Zeitkorrekturwert ermittelt wird, um eine lokale Zeit des Teilnehmers an eine globale Zeit des Bussystems anzupassen.

4. Verfahren nach Anspruch 1 und 2, **dadurch gekennzeichnet, dass** die Überwachungsfunktion derart überprüft wird, das der Teilnehmer eine Testnachricht in dem zweiten Zeitabschnitt zu senden versucht und überprüft wird ob diese Testnachricht gesperrt wurde.

5. Verfahren nach Anspruch 4, **dadurch gekennzeichnet, dass** der Teilnehmer von ihm selbst gesendete Nachrichten vom Bussystem zurück lesen kann und damit selbst die Überprüfung ob die Testnachricht gesperrt wurde durchführt.

6. Verfahren nach Anspruch 5, **dadurch gekennzeichnet, dass** die Testnachricht eine im Bussystem eindeutige Signalform besitzt um diese von transienten Einstrahlungen zu unterscheiden.

7. Verfahren nach Anspruch 1, **dadurch gekennzeichnet, dass** jeder Teilnehmer die Überprüfung selbst durchführt und die Überprüfung der Überwachungsfunktion nur gleichzeitig von einem einzigen Teilnehmer durchgeführt werden kann.

8. Verfahren nach Anspruch 1, **dadurch gekennzeichnet, dass** jedem Teilnehmer ein dritter Zeitabschnitt zugeordnet wird, welcher innerhalb des zweiten Zeitabschnittes liegt in welchem nur der entsprechende Teilnehmer die Überwachungsfunktion überprüfen kann.

9. Verfahren nach Anspruch 1, **dadurch gekennzeichnet, dass** der zweite Zeitabschnitt in jedem Kommunikationszyklus jeweils einem Teilnehmer fest zugeordnet ist und während des zweiten Zeitabschnitts nur der entsprechende Teilnehmer die Überwachungsfunktion überprüfen kann.

10. Verfahren nach Anspruch 8 oder 9, **dadurch gekennzeichnet, dass** jeder Teilnehmer die Überprüfung selbst durchführt.

11. Verfahren nach Anspruch 4, **dadurch gekennzeichnet**, das die Testnachricht eine eindeutige Signalform besitzt und jedem Teilnehmer eine eigene Testnachricht zugeordnet ist, wobei sich die Testnachrichten der einzelnen Teilnehmer voneinander unterschieden.

12. Verfahren nach Anspruch 10, **dadurch gekennzeichnet, dass** eine einem Teilnehmer zugeordnete Testnachricht nur von dem einen Teilnehmer empfangen werden kann.

13. Verfahren nach Anspruch 4, **dadurch gekennzeichnet, dass** jedem Teilnehmer eine Testnachricht oder ein Zeitabschnitt eindeutig zugeordnet wird und wenigstens ein zweiter Teilnehmer die Überprüfung der Überwachungsfunktion eines ersten Teilnehmers durchführt.

14. Verfahren nach Anspruch 13, **dadurch gekennzeichnet, dass** der wenigstens eine zweite Teilnehmer dem ersten Teilnehmer ein Ergebnis der Überprüfung der Überwachungsfunktion des ersten Teilnehmers übermittelt.

15. Vorrichtung zur Überprüfung einer Überwachungsfunktion eines Bussystems mit wenigstens einem Teilnehmer, wobei erste Zeitabschnitte vorgesehen sind in welchen Nachrichten übertragen werden und aus einer Anzahl erster Zeitabschnitte ein Kommunikationszyklus derart gebildet wird, dass die Nachrichten in ersten Zeitabschnitten übertragen werden, wobei die Anzahl erster Zeitabschnitte und die jeweilige Position eines ersten Zeitabschnitts für die Nachrichten des Teilnehmers in dem Kommunikationszyklus vorgegeben ist und ein zweiter Zeitabschnitt vorgesehen ist, in dem die Überwachungsfunktion überprüft wird, **dadurch gekennzeichnet, dass** die Vorrichtung derart ausgebildet ist, dass der zweite Zeitabschnitt für jeden Kommunikationszyklus festgelegt ist und dem Kommunikationszyklus zugerechnet ist und dass der zweite Zeitabschnitt gegen Nachrichtenübertragung jedes Teilnehmers gesperrt ist.

16. Bussystem mit einer Vorrichtung nach Anspruch 15.

17. Bussystem nach Anspruch 16, **dadurch gekennzeichnet, dass** das Bussystem eine Sterntopologie aufweist und jeder Teilnehmer eine Verbindung zu einem Koppelelement des Bussystems in Sterntopologie besitzt, wobei das Koppelelement derart ausgebildet ist, dass eine Testnachricht eines Teilnehmers nicht durch das Koppelelement weitergeleitet wird, wobei jeder Teilnehmer von dem Teilnehmer selbst gesendete Nachrichten vom Bussystem zurücklesen und eine Selbstprüfung durchführen kann.

## Claims

1. Method for checking a monitoring function on a bus system having at least one subscriber, wherein first time periods are provided in which messages are transmitted, and from a number of first time periods a communication cycle is formed such that the messages are translated in first time periods, wherein the number of first time periods and the respective position of a first time period are prescribed for the messages from the subscriber in the communication cycle, and a second time period is provided in which the monitoring function is checked, **characterized in that** the second time period is stipulated for each communication cycle and is attributed to the communication cycle, wherein the second time period is blocked to message transmission by any subscriber.

2. Method according to Claim 1, **characterized in that** the second time period also involves the processing of internal protocol tasks of the subscriber on the bus system.

3. Method according to Claim 2, **characterized in that** the internal protocol task ascertained is a time correction value in order to match a local time on the subscriber to a global time on the bus system.

4. Method according to Claims 1 and 2, **characterized in that** the monitoring function is checked such that the subscriber attempts to send a test message in the second time period and a check is performed to determine whether said test message has been blocked.

5. Method according to Claim 4, **characterized in that** the subscriber can read back messages which it itself has sent from the bus system and hence itself performs the check to determine whether the test message has been blocked.

6. Method according to Claim 5, **characterized in that** the test message has a signal form which is explicit in the bus system in order to distinguish it from transient radiation.

7. Method according to Claim 1, **characterized in that** each subscriber performs the check itself, and the check on the monitoring function can be performed only by a single subscriber at the same time.

8. Method according to Claim 1, **characterized in that** each subscriber is allocated a third time period, which is within the second time period, in which only the relevant subscriber can check the monitoring function.

9. Method according to Claim 1, **characterized in that** the second time period in each communication cycle is permanently associated with a respective subscriber, and during the second time period only the relevant subscriber can check the monitoring function.

10. Method according to Claim 8 or 9, **characterized in that** each subscriber performs the check itself.

11. Method according to Claim 4, **characterized in that** the test message has an explicit signal form, and each subscriber has an associated dedicated test message, wherein the test messages of the individual subscribers differ from one another.

12. Method according to Claim 10, **characterized in that** a test message associated with a subscriber can be received only by said subscriber.

13. Method according to Claim 4, **characterized in that** each subscriber is explicitly allocated a test message or a time period, and at least one second subscriber performs the check on the monitoring function of a first subscriber.

14. Method according to Claim 13, **characterized in that** the at least one second subscriber sends the first subscriber a result of the check for the monitoring function of the first subscriber.

15. Apparatus for checking the monitoring function on a bus system having at least one subscriber, wherein first time periods are provided in which messages are transmitted, and from a number of first time periods a communication cycle is formed such that the messages are transmitted in first time periods, wherein the number of first time periods and the respective position of a first time period are provided for the messages from the subscriber in the communication cycle, and a second time period is provided in which the monitoring function is checked, **characterized in that** the apparatus is in a form such that the second time period is stipulated for each communication cycle and is attributed to the communication cycle, and **in that** the second time period is blocked to message transmission by any subscriber.

16. Bus system having an apparatus according to Claim 15.

17. Bus system according to Claim 16, **characterized in that** the bus system has a star topology and each subscriber has a connection to a coupling element on the bus system in star topology, wherein the coupling element is in a form such that a test message from a subscriber is not forwarded by the coupling element, wherein each subscriber can read back messages sent by the subscriber itself from the bus system and can perform a self-check.

## Revendications

1. Procédé de vérification d'une fonction de surveillance d'un système de bus qui présente au moins un participant, dans lequel
des premiers intervalles de temps dans lesquels des messages sont transmis sont prévus et un cycle de communication est formé par un certain nombre de premiers intervalles de temps de telle sorte que les messages soient transmis dans des premiers intervalles de temps,
le nombre des premiers intervalles de temps et la position de chaque premier intervalle de temps prévu pour les messages du participant étant prédéterminés dans le cycle de communication et
un deuxième intervalle de temps dans lequel la fonction de surveillance est vérifiée est prévu, **caractérisé en ce que**
le deuxième intervalle de temps est défini pour chaque cycle de communication et est attribué au cycle de communication,
la transmission de messages par chaque participant étant bloquée pendant le deuxième intervalle de temps.

2. Procédé selon la revendication 1, **caractérisé en ce que** des tâches internes de procès-verbal du participant au système de bus sont aussi traitées dans le deuxième intervalle de temps.

3. Procédé selon la revendication 2, **caractérisé en ce que** comme tâche interne de procès-verbal, une valeur de correction du temps est déterminée pour adapter le temps local du participant au temps global du système de bus.

4. Procédé selon les revendications 1 et 2, **caractérisé en ce que** la fonction de surveillance est vérifiée par le fait que le participant cherche à envoyer un message de test dans le deuxième intervalle de temps et vérifie si ce message de test a été bloqué.

5. Procédé selon la revendication 4, **caractérisé en ce que** le participant peut relire sur le système de bus les messages qu'il a lui-même envoyés et vérifier ainsi lui-même si le message de test a été bloqué.

6. Procédé selon la revendication 5, **caractérisé en ce que** le message de test possède dans le système de bus une forme de signal univoque qui permet de le distinguer de rayonnements transitoires.

7. Procédé selon la revendication 1, **caractérisé en ce que** chaque participant exécute la vérification lui-même et la vérification de la fonction de surveillance ne peut être exécutée que par un seul participant à la fois.

8. Procédé selon la revendication 1, **caractérisé en ce qu'**un troisième intervalle de temps est attribué à chaque participant et est situé à l'intérieur du deuxième intervalle de temps dans lequel seul le participant concerné peut vérifier la fonction de surveillance.

9. Procédé selon la revendication 1, **caractérisé en ce que** chaque deuxième intervalle de temps de chaque cycle de communication est associé fixement à un participant et pendant le deuxième intervalle de temps, seul le participant concerné peut vérifier la fonction de surveillance.

10. Procédé selon la revendication 8 ou 9, **caractérisé en ce que** chaque participant exécute lui-même la vérification.

11. Procédé selon la revendication 4, **caractérisé en ce que** le message de test possède une forme de signal univoque et à chaque participant est associé un message de test propre, les messages de test des différents participants étant différents les uns des autres.

12. Procédé selon la revendication 10, **caractérisé en ce qu'**un message de test associé à un participant ne peut être reçu que par ce participant.

13. Procédé selon la revendication 4, **caractérisé en ce qu'**un message de test ou un intervalle de temps est associé de manière claire à chaque participant et au moins un deuxième participant exécute la vérification de la fonction de surveillance d'un premier participant.

14. Procédé selon la revendication 13, **caractérisé en ce que** le ou les deuxièmes participants transmettent au premier participant le résultat de la vérification de la fonction de surveillance du premier participant.

15. Dispositif de vérification d'une fonction de surveillance d'un système de bus qui présente au moins un participant, dans lequel
des premiers intervalles de temps dans lesquels des messages sont transmis sont prévus et un cycle de communication est formé par un certain nombre de premiers intervalles de temps de telle sorte que les messages soient transmis dans des premiers intervalles de temps,
le nombre des premiers intervalles de temps et la position de chaque premier intervalle de temps prévu pour les messages du participant étant prédéterminés dans le cycle de communication et
un deuxième intervalle de temps dans lequel la fonction de surveillance est vérifiée est prévu, **caractérisé en ce que**
le dispositif est configuré de telle sorte que le deuxième intervalle de temps est défini pour chaque cycle de communication et est attribué au cycle de communication et
**en ce que** la transmission de messages par chaque participant est bloquée pendant le deuxième intervalle de temps.

16. Système de bus doté d'un dispositif selon la revendication 15.

17. Système de bus selon la revendication 16, **caractérisé en ce que** le système de bus présente une topologie en étoile et chaque participant possède une liaison avec un élément de couplage du système de bus dans la topologie en étoile, l'élément de couplage étant configuré de telle sorte qu'un message de test d'un participant n'est pas transmis par l'élément de couplage, chaque participant pouvant relire sur le système de bus les messages qu'il a lui-même envoyés et pouvant exécuter une auto-vérification.
